# EUROPEAN PATENT APPLICATION

(11) **EP 4 421 825 A1**
(43) Date of publication of application: **28.08.2024**
(21) Application number: 22884863.6
(22) Date of filing: 05.01.2022
(51) Int. Cl.: G21C 15/18

(54) **PRESSURE SUPPRESSION POOL APPARATUS AND NUCLEAR REACTOR**

(30) Priority: 29.10.2021 CN 202111277570
(71) Applicant: China Nuclear Power Technology Research Institute Co., Ltd, Shenzhen, Guangdong 518031 (CN); China General Nuclear Power Corporation, Shenzhen, Guangdong 518028 (CN); CGN Power Co., Ltd., Shenzen, Guangdong 518028 (CN)
(72) Inventor: LIANG, Huo, Shenzhen, Guangdong 518031 (CN); LIU, Jinlin, Shenzhen, Guangdong 518031 (CN); YANG, Jiang, Shenzhen, Guangdong 518031 (CN); CHEN, Yunyin, Shenzhen, Guangdong 518031 (CN); CUI, Xuyang, Shenzhen, Guangdong 518031 (CN); LIU, Zhonghao, Shenzhen, Guangdong 518031 (CN); CHEN, Yichen, Shenzhen, Guangdong 518031 (CN); JI, Wenying, Shenzhen, Guangdong 518031 (CN); SHEN, Yonggang, Shenzhen, Guangdong 518031 (CN); OUYANG, Yong, Shenzhen, Guangdong 518031 (CN); LU, Xianghui, Shenzhen, Guangdong 518031 (CN); WANG, Xianmao, Shenzhen, Guangdong 518031 (CN); LIU, Jianchang, Shenzhen, Guangdong 518031 (CN)
(74) Representative: Westphal, Mussgnug & Partner, Patentanwälte mbB
(86) International application number: PCT/CN2022/070362
(87) International publication number: WO 2023/070943

(57) **Abstract**

A pressure suppression pool apparatus and a nuclear reactor. The pressure suppression pool apparatus comprises a housing (1) and at least one hollow pressure suppression pipe (2); a closed cavity and a plurality of baffles (3) for slowing gas flow are provided in the housing (1); the cavity is filled with a cooling liquid (11); the baffles (3) are submerged in the cooling liquid (11); an accommodating space (12) for accommodating gas is provided on the cooling liquid (11) inside the cavity; the pressure suppression pipe (2) passes through the outer wall of the housing (1), and comprises an out-of-housing section (21) located outside the housing (1) and an in-housing section (22) located in the housing (1); an end portion of the in-housing section (22) is inserted into the cooling liquid (11), and the out-of-housing section (21) is connected to the gas in an environment. The present pressure suppression pool apparatus is a passive system, has high safety and reliability, high cooling efficiency, and a significant pressure suppression effect, can effectively suppress the rise of the pressure and temperature of a containment under predetermined working conditions, and has low volume requirements for the space (12) and the cooling liquid (11).

## Description

### TECHNICAL FIELD

The present invention relates to the field of safety system equipment design in nuclear power plants, particularly to a suppression pool device and a nuclear reactor.

### BACKGROUND

The containment vessel plays a particularly important role in the safety of nuclear power plants. It is the last barrier to prevent fission products from the fuel and radioactive substances from a single loop from entering the environment. When a loss-of-coolant accident occurs in the coolant system of a nuclear power plant or a rupture or failure occurs in the secondary loop of the steam-water circuit, it is necessary to ensure the removal of core heat and the integrity of the containment vessel, limit the development of accidents, and mitigate the consequences of accidents. For this purpose, nuclear power plants are equipped with dedicated safety facilities.

In the prior art, suppression pool systems are used as safety facilities in some reactors, or containment spray systems are used as safety facilities for containment vessels. However, in the current design of suppression pool systems, the condensation effect of the suppression pool steam is generally poor, resulting in the gas mixture entering the gas space of the suppression pool still containing a considerable amount of steam, and the temperature is high, requiring a larger gas space and cooling water volume to complete the steam cooling. The containment spray system still has disadvantages, as its activation depends on the active operation of the spray water pump, which must rely on an external power source to ensure the system's operation, resulting in a low safety factor.

### SUMMARY OF THE INVENTION

### TECHNICAL PROBLEM

The technical problem to be solved by the present invention is to provide a suppression pool device and a nuclear reactor.

### SOLUTION TO THE PROBLEM

### TECHNICAL SOLUTION

The technical solution adopted by the present invention to solve the technical problem is as follows: constructing a suppression pool device, comprising a shell and at least one hollow suppression tube, wherein the shell is provided with a sealed cavity and several baffles to slow down gas flow; the cavity is filled with cooling liquid, and the baffles are immersed in the cooling liquid; and a retention space for accommodating gas is provided above the cooling liquid inside the cavity.

The suppression tube passes through the outer wall of the shell, and the suppression tube comprises a shell outer shell segment located outside the shell and a shell inner shell segment located inside the shell; an end of the shell inner shell segment is inserted into the cooling liquid, the shell outer shell segment is connected to the gas in the environment, and under predetermined conditions, the gas enters the cooling liquid through the shell inner shell segment for cooling.

Preferably, at least one side of any of the baffles is fixedly connected to the inner side wall of the shell, and at least one other side of the baffles is provided with a flow passage for the gas to flow into the retention space between the adjacent inner wall of the shell.

Preferably, any two adjacent baffles are arranged at intervals along the buoyancy direction of the gas.

Preferably, in the horizontal or liquid level direction, the two flow passages are located on opposite sides of the inner wall of the shell.

The inner wall of the shell and the space defined by several baffles in the cooling liquid, together with all the flow passages, constitute a cooling flow channel for gas flow.

Preferably, the longitudinal cross-section of the baffles is wavy, and the baffles are provided with several grooved flow channels for limiting the aggregation of gas into large bubbles.

Preferably, any of the baffles forms a set angle with the liquid level of the cooling liquid; the angle is 5°-10°.

Preferably, the shell further comprises at least one support pillar for supporting the baffles, one end of the support pillar is fixedly connected to the inner wall of the shell, and the other end passes through the baffles and is fixedly connected thereto.

Preferably, the shell further comprises an exhaust pipe communicating with the retention space and the environment, and a valve installed on the exhaust pipe, the opening and closing of the valve are controlled based on the atmospheric pressure in the environment and the retention space to discharge gas from the retention space.

Preferably, the shell inner shell segment comprises a vertical segment and a lateral segment immersed in the cooling liquid, wherein one end of the vertical segment communicates with the outer end of the shell, the other end of the vertical segment passes through the retention space and is connected to the lateral segment, and the lateral segment is provided with exhaust ports for discharging gas into the cooling liquid.

Preferably, the lateral segment is tubular and sealed at both axial ends; the outer wall of the vertical segment is connected to the lateral segment, and several exhaust holes are provided on the outer wall of the lateral segment, and the exhaust port is one of the exhaust holes.

Preferably, several grooves flow channels are provided on the baffles for limiting the aggregation of gas into large bubbles; the axial direction of the lateral segment is perpendicular to the axial direction of the grooves.

The present invention also constructs a nuclear reactor, comprising a containment vessel and steam pipes arranged inside the containment vessel, the containment vessel further comprises any one of the above suppression pool device, and the shell outer shell segment of the suppressing water pool device is connected to the gas inside the containment vessel.

### BENEFICIAL EFFECTS OF THE INVENTION

### BENEFICIAL EFFECTS

Implementing the present invention has the following advantageous effects: the suppression pool device in the present invention only requires a simple structure such as a shell, suppression tube, cooling liquid, and baffles to suppress the rise in pressure and temperature of the containment vessel. The manufacturing process is simple and low-cost; moreover, by setting a retention space inside the shell, gas is automatically drawn into the retention space by the pressure difference, which belongs to a passive system and does not require active energy input, ensuring high safety and reliability; furthermore, the setting of baffles effectively improves the cooling efficiency and enhances the suppression effect, reducing the requirements for conventional suppression pool gas space and cooling water volume, thereby reducing construction and design difficulties and improving the economy of nuclear power plants.

### BRIEF DESCRIPTION OF THE DRAWINGS

The present invention will be further explained in conjunction with the accompanying drawings and embodiments. In the drawings:
Figure 1 is a schematic diagram of the structure of the suppression pool device of the present invention;
Figure 2 is a schematic diagram of the meandering flow path in the suppression pool device of the present invention;
Figure 3 is a schematic diagram of the structure of the baffles in the suppression pool device of the present invention;
Figure 4 is a schematic diagram of the longitudinal section of the baffles in the suppression pool device of the present invention;
Figures 5-6 are schematic diagrams of adjacent two baffles in the suppression pool device of the present invention connected to the shell from a top view angle.

### PREFERRED EMBODIMENT FOR IMPLEMENTING THE INVENTION

### PREFERRED EMBODIMENT OF THE INVENTION

In order to have a clearer understanding of the technical features, objectives, and effects of the present invention, the specific embodiments of the present invention are described in detail with reference to the drawings. It should be understood that the directional or positional relationships such as "front," "back," "top," "bottom," "left," "right," "vertical," "horizontal," "up," "down," "inner," "outer," "head," and "tail" are based on the orientation or position relationship shown in the drawings and are constructed and operated with specific orientations, solely for the purpose of facilitating the description of the technical solution, rather than indicating that the devices or components referred to must have specific orientations. Therefore, they should not be understood as limiting the present invention.

It is also necessary to clarify that, unless otherwise expressly specified and limited, terms such as "installation," "connection," "linking," "fixing," and "setting" should be understood in a broad sense. For example, they can be fixed connections, detachable connections, or integral connections; they can be mechanical connections or electrical connections; they can be directly connected or indirectly connected through an intermediate medium; they can be internal communication between two components or interaction between two components. When one component is referred to as "on" or "under" another component, the component can be "directly" or "indirectly" above the other component, or there may be one or more intermediate components. Terms such as "first," "second," "third," etc. are only used to facilitate the description of the technical solution and should not be understood as indicating or implying the relative importance or implying the quantity of the technical features indicated. Therefore, features with "first," "second," "third," etc. can explicitly or implicitly include one or more of those features. For those skilled in the art, the specific meanings of the above terms in the present invention can be understood according to specific circumstances.

In the nuclear power plant system, when a loss of cooling liquid accident occurs in the reactor coolant system or a rupture or failure occurs in the secondary loop of the steam-water circuit, it is necessary to ensure the discharge of core heat and the integrity of the containment vessel, limit the development of accidents, and mitigate the consequences of accidents. For this purpose, nuclear power plants are equipped with dedicated safety facilities.

Therefore, the present invention creates a suppression pool device, which can be applied to the interior environment of the containment vessel, to quickly and effectively suppress the rise of pressure and temperature in the containment vessel under predetermined conditions when a high-temperature and high-pressure gas pipeline ruptures, thereby protecting the interior environment of the containment vessel. Of course, it can also be applied to other environments that require rapid treatment of high-temperature and high-pressure gas.

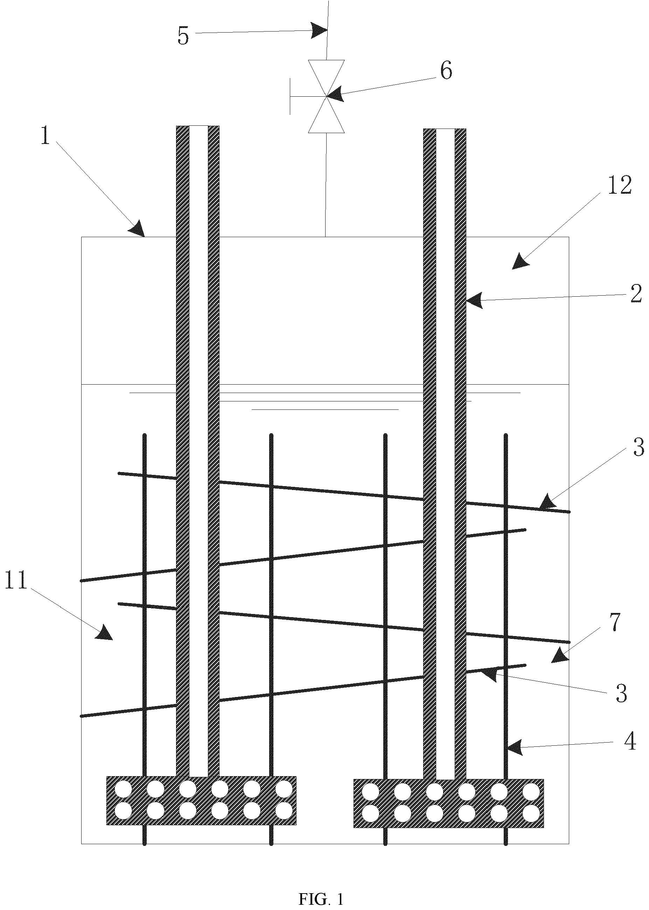

As shown in Figures 1 to 6, one embodiment of the suppression pool device in the present invention comprises a shell 1 and at least one hollow suppression tube 2. The shell 1 is internally provided with a sealed cavity and several baffles 3 that slow down gas flow; the cavity is filled with cooling liquid 11, and the baffles 3 are immersed in the cooling liquid 11; and there is a retention space 12 above the cooling liquid 11 in the cavity for accommodating gas.

It can be understood that the suppression pool device can be set in any suitable space inside the containment vessel, preferably around the steam-water circuit, so that the suppression pool device acts on the predetermined conditions at the first time. The shell 1 can be a regular rectangular, annular, cylindrical, or polyhedron irregular shape, as long as it meets certain structural strength requirements. The shell 1 is internally provided with a sealed cavity and multiple baffles 3 for slowing down gas flow, and the baffles 3 are fixedly connected to the inner wall of the shell 1; the cavity is loaded with cooling liquid 11, and a retention space 12 for accommodating gas is provided above the cooling liquid 11 inside the cavity.

Furthermore, the cooling liquid 11 in the shell 1 needs to be filled in advance before the reactor is operated. The filling method can be a liquid inlet not shown opened on the side or bottom wall of the shell 1 and a switch not shown for controlling the opening and closing of the liquid inlet. When it is necessary to fill the cooling liquid 11, the liquid inlet is opened by the switch, and after filling, the liquid inlet is closed to ensure the sealing of the cavity inside the shell 1. The cooling liquid 11 divides the space inside the cavity into a gas space, namely the retention space 12 for accommodating gas, and a liquid space. The gas space is located above the liquid space, and initially, the temperature and pressure of the gas space are approximately the same as those of the interior environment of the containment vessel. It should be noted that the gas contained in the retention space 12 can be the gas in the atmosphere or a mixture of the gas in the atmosphere and the gas sucked from inside the containment vessel. The volume of the shell 1, the cavity, and the cooling liquid 11 can be set according to the design characteristics of different reactors, matching the maximum rupture diameter of the reactor, the water volume of the primary and secondary loops, operating temperature, and pressure of the reactor, etc. Optionally, water can be used as the cooling liquid 11.

The suppression pool device is installed within the containment shell, connecting the atmospheric environment of the containment shell to the internal space of the housing 1 through the suppression tube 2. Under predetermined conditions, the gas from the containment shell enters the cooling liquid 11 through the suppression tube 2 for cooling. These predetermined conditions refer to when the atmospheric pressure within the containment shell is greater than the pressure in the retention space 12 of shell 1. Specifically, when the primary or secondary side pipelines of the containment shell's nuclear island system rupture, high-temperature, high-pressure steam is rapidly released into the containment environment, causing the pressure to rise quickly and creating a pressure differential between the containment atmosphere and the gas space in the suppression pool device, where the containment atmosphere pressure exceeds the gas space pressure. Due to the pressure differential, the mixed gases in the containment shell, such as steam and non-condensable gases, quickly enter the liquid space of the suppression pool through the suppression tube 2, where the steam comes into contact with water and rapidly condenses into water, thereby reducing the pressure within the containment shell.

As shown in Figure 1, the suppression tube 2 is hollow, with one end in the containment environment equipped with a vent and the other end submerged in the cooling liquid 11 equipped with exhaust ports. The suppression tube 2 penetrates the outer wall of shell 1 and includes an outer shell segment 21 located outside shell 1 and an inner shell segment 22 located inside shell 1. The end of the inner shell segment 22 is inserted into the cooling liquid 11, while the outer shell segment 21 connects to the external environment, allowing gas to enter the cooling liquid 11 through the inner shell segment 22 for cooling. In this embodiment, the suppression tube 2 is a hollow, strip-shaped circular tube. The inner shell segment 22 includes a vertical segment 221 and a lateral segment 222 submerged in the cooling liquid 11. One end of the vertical segment 221 connects to the outer segment, while the other end passes through the retention space 12 and connects to the lateral segment 222, which has exhaust ports allowing gas to enter from the outer shell segment and pass through the vertical segment 221 to be discharged into the cooling liquid 11 through the exhaust ports on the lateral segment 222.

It can be understood that the connection between the outer shell segment 21 and the vertical segment 221 can be threaded, welded, or integrally formed. In this embodiment, the outer shell segment 21 and the vertical segment 221 are parts of the same hollow pipe located at different positions. The outer shell segment 21 extends in the same direction as the axial direction of shell 1, the vertical segment 221 extends in the same direction as the outer shell segment 21, and the lateral segment 222 extends perpendicular to the vertical segment 221, with the lateral segment 222 and the vertical segment 221 fixedly connected by welding, bonding, or threading. It should be noted that the specific structure of the outer shell segment 21, vertical segment 221, and lateral segment 222 is just one embodiment of the invention. In practice, the shape and extension direction of the suppression tube 2 can be altered based on actual working conditions, such as the extension direction of the part of the inner shell segment 22 that is submerged in the cooling liquid 11 can be set to extend in a serpentine manner, so as to enhance the cooling effect by lengthening the time that the gas passes through the pipe. The exhaust ports on the lateral segment 222 can be through-holes at both axial ends of the lateral segment 222 or multiple exhaust holes 2221 on the circumferential outer wall of the lateral segment 222. In this embodiment, to ensure adequate cooling of the containment shell gases, the lateral segment 222 is tube-shaped with both axial ends sealed. The outer wall of the lateral segment 222 is connected to the vertical segment 221, with multiple exhaust holes 2221 on the outer wall of the lateral segment 222. The exhaust ports of the lateral segment 222 are these exhaust holes 2221. Preferably, the hole diameter is between 1cm and 2cm, and the center-to-center distance between adjacent exhaust holes 2221 is twice the hole diameter. The total area of the exhaust holes 2221 is 1.5 times greater than the flow area of the outer shell segment 21 and the vertical segment 221.

During installation, the suppression tube 2 should be inserted as deep as possible into the cooling liquid 11. In this embodiment, the suppression tube 2 is inserted to the bottom of the suppression pool, below the lowest corrugated baffle 3, with the axial extension direction of the lateral segment 222 perpendicular to the axial extension direction of the grooved flow channels 31 on the baffle 3, so that the discharged gas is distributed in more grooved flow channels 31. Under normal conditions, as the pressure in the gas space of the suppression pool is equal to the pressure in the gas space of the containment shell, the liquid level inside the suppression tube 2 will be level with the liquid level inside the pool. The number of suppression tubes 2 and the inner diameter of the grooved flow channels 31 can be set according to specific reactor parameters.

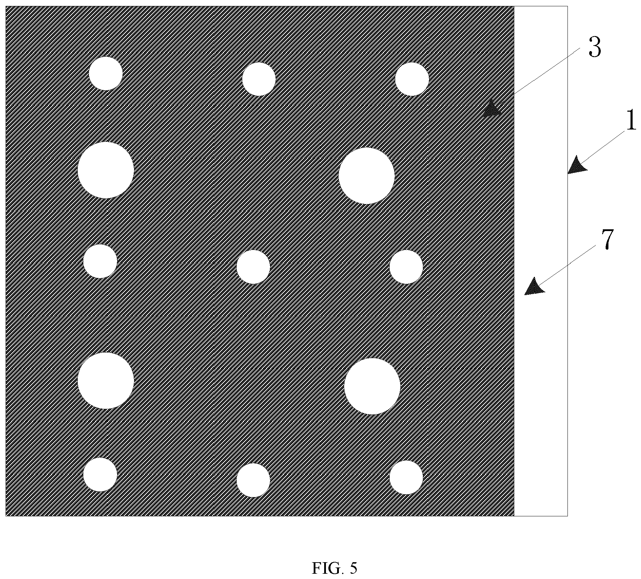

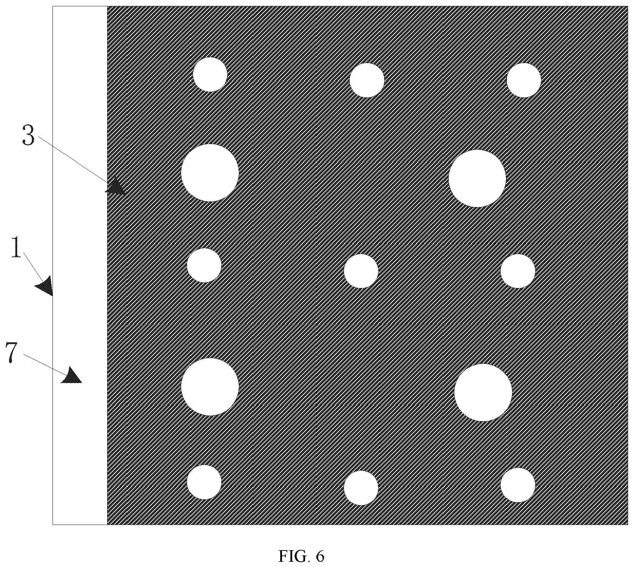

As shown in Figure 1, to ensure the containment shell gases are adequately cooled in the suppression pool device, baffles 3 are arranged within shell 1 and submerged in the cooling liquid 11. When gases from the environment enter the cooling liquid 11 through the suppression tube 2, the baffles 3 obstruct the ascent of the gas to achieve adequate cooling. Further, at least one side of each baffle 3 is fixedly connected to the inner sidewall of shell 1, with at least one other side leaving a flow passage 7 for gas to enter the retention space 12. In this embodiment, as shown in Figures 5 and 6, any of the baffles 3 has a rectangular plate structure with four edges, three of which are attached to the inner sidewall of shell 1 and fixedly connected to it by welding, bonding, or using fasteners. The fourth edge of the baffle 3 leaves a distance of about 20cm from the adjacent inner sidewall of shell 1 to form a flow passage 7 for gas to the retention space 12. Additionally, to prevent gas from accumulating into large bubbles during the ascent, the baffle 3 is installed at a set angle to the liquid level of the cooling liquid 11, with an angle between 5° and 10°.

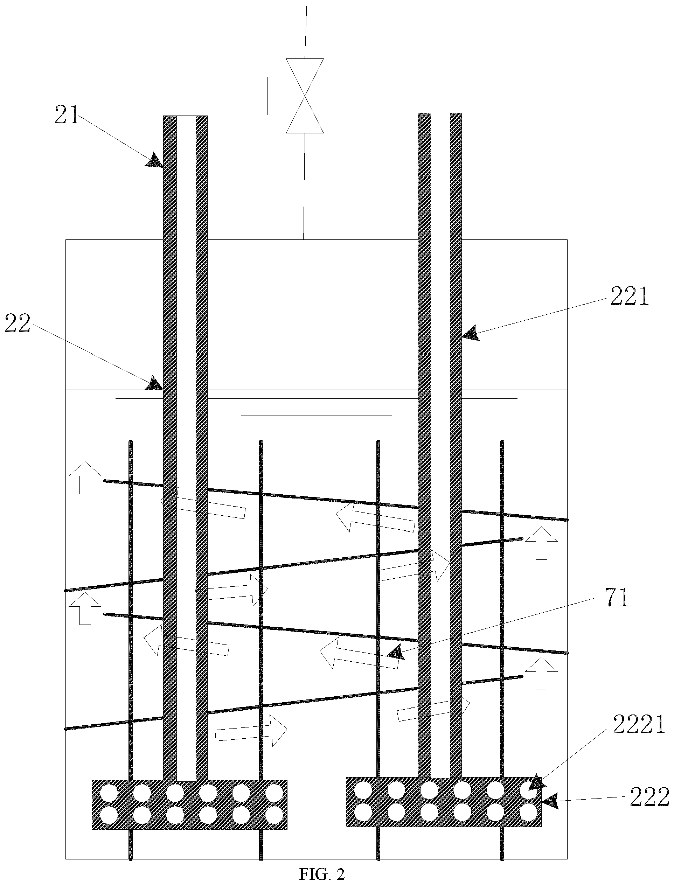

Furthermore, any two adjacent baffles 3 are arranged at intervals along the gas flow direction, specifically along the buoyancy direction of the gas. As shown in Figures 5 and 6, at least one edge of each of any two adjacent baffles 3 is respectively fixed to the opposite inner sidewalls of shell 1, creating flow passages 7 on opposite sides of shell 1. The space defined by the inner walls of shell 1 and several baffles 3 within the cooling liquid 11, together with all the flow passages 7, form a cooling flow channel 71 for the gas. As shown in Figure 2, the lateral segment 222 of the suppression tube 2 is positioned below the lowest baffle 3, with baffles 3 arranged upwards from the bottom of shell 1. In any two adjacent baffles 3, the lowest point of the upper baffle 3 is higher than the highest point of the lower baffle 3, forming a meandering upward cooling flow channel 71. The more baffles 3 there are, the longer the cooling flow channel 71, resulting in a longer gas flow time within the liquid space and a more significant cooling effect. Therefore, the number of baffles 3 can be appropriately increased, preferably 4-6 baffles 3. Preferably, any two adjacent baffles 3 are equally spaced. Additionally, the topmost baffle should also be submerged below the liquid surface of the cooling liquid 11.

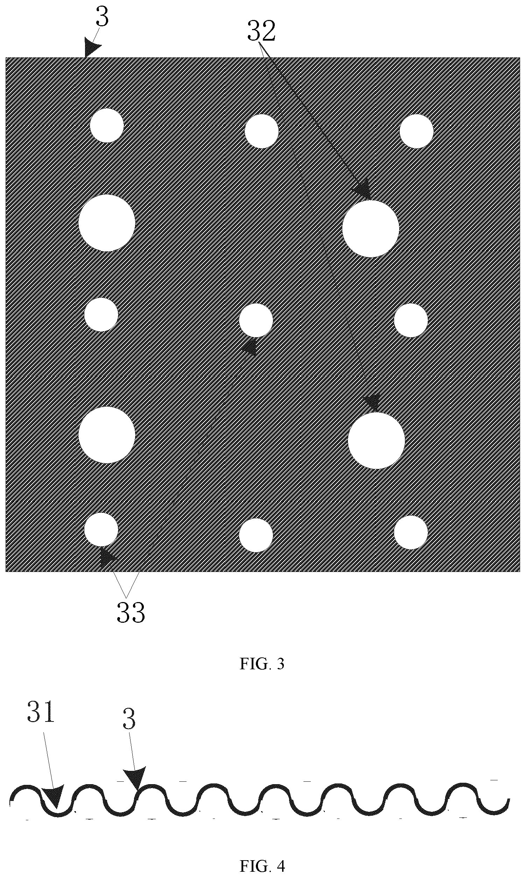

Preferably, the baffles 3 are plate structures of stainless steel to prevent rusting and enhance structural strength while aiding in heat dissipation. The baffles 3 also are provided with several grooved flow channels 31 for limiting the aggregation of gas into large bubbles. As shown in Figure 4, the longitudinal section of the baffles 3 has a wavy shape, forming several parallel grooved flow channels 31 on the baffles 3. This design enhances the overall rigidity of the baffles 3, preventing deformation, and prevents the gas discharged from the suppression tube 2 from forming large bubbles under the baffles 3, reducing the contact area between the gas and the cooling liquid 11. Additionally, it increases the contact area between the gas and the baffles 3, facilitating the transfer of energy from the gas to the baffles 3, enhancing gas cooling. Preferably, the axial extension direction of the lateral segment 222 of the suppression tube 2 is perpendicular to the axial extension direction of the grooved flow channels 31, ensuring the discharged gas is distributed across more grooved flow channels 31. Optionally, the grooved flow channels 31 can be parallel to the inclined upward direction of the baffles 3.

As shown in Figure 3, to allow the suppression tube 2 to pass through the baffle 3 and insert vertically from the top of the shell 1 to the bottom, several suppression tube through-holes 32 are provided on the baffle 3. These through-holes are sized, numbered, and positioned to match the vertical segments 221 of the suppression tube 2. Additionally, at least one support pillar 4 is installed inside the shell 1 to support the baffle 3. Correspondingly, the baffle 3 is equipped with support pillar through-holes 33 that match the number and size of the support pillars 4. One end of each support pillar 4 is fixedly connected to the inner wall of the shell 1, and the other end passes through the baffle 3 and is fixedly connected to it. Understandably, the support pillars 4 are cylindrical stainless steel columns standing vertically at the bottom of the shell 1, providing support and fixing the baffle 3. The bottom of the support pillars 4 is fixed to the inner bottom wall of the shell 1 by welding or other means; the top of the support pillars 4 can be fixedly connected to the inner top wall of the shell 1 or suspended within the shell 1; the support pillars 4 are fixedly connected to the contact edge of the support pillar through-holes 33 of the baffle 3, which can be done through bolting, gluing, or welding.

As shown in Figure 1, the shell 1 is also equipped with an exhaust pipe 5 that connects the retention space 12 to the environment and a valve 6 installed on the exhaust pipe 5. The valve 6 controls the opening and closing based on the atmospheric pressure difference between the environment and the retention space 12, allowing the release of gases from the retention space 12. It is understood that under predetermined working conditions, when the pressure in the gas space of the suppression pool device exceeds the atmospheric pressure in the containment by a certain value, the valve 6 can automatically open, enabling communication between the gas space of the suppression pool and the containment atmosphere, preventing backflow of water from the suppression pool through the suppression tube 2 into the containment environment. Under other circumstances, the valve remains closed. The valve 6 can include a relief valve or a rupture valve, or it can be connected to a pressure sensor; the pressure sensor is placed inside the shell 1. When the pressure in the gas space of the suppression pool device exceeds a first preset value of the containment atmospheric pressure, it can control the valve 6 to open automatically until the pressure in the gas space of the suppression pool device falls below a second preset value of the containment atmospheric pressure, at which point it closes.

During the operation of this suppression pool device:

In the event of a rupture accident in the high-temperature piping of the reactor inside the containment, a large amount of high-temperature and high-pressure steam enters the containment atmosphere, causing the environmental pressure to rise and exceed the pressure in the gas space of the suppression pool device. At this time, due to the pressure difference, the outer shell segment 21 of the suppression tube 2 draws in the mixed gases from inside the containment, and discharges them through the exhaust holes 2221 of the horizontal segment 222 into the space below the lowest baffle 3 of the suppression pool. Driven by buoyancy, the gases flow upward along the grooved flow channels 31 of the baffle 3 and slowly meander through the cooling flow channel 71 formed between multiple layers of baffles 3. Eventually, they float up to the cooling liquid 11 surface through the gap between the highest baffle 3 and the inner side wall of the shell 1, and then enter the gas space. A schematic diagram of the meandering flow path is shown in Figure 2.

During the upward meandering flow of the bubbles, they are gradually cooled by the cooling liquid 11 and the baffles 3, ultimately causing the steam in the gas mixture to condense and remain in the liquid space. Consequently, only the relatively low-temperature non-condensable gases enter the gas space of the suppression pool. When the liquid space within the shell 1 occupies a disproportionate volume of the shell 1, some liquid can be discharged through liquid ports opened in the side or bottom walls of the shell 1.

The inclined arrangement of the baffles 3 slows the ascent speed of the gases while extending their path within the liquid space, thereby significantly increasing the contact time between the gases and the cooling liquid 11, enhancing the cooling efficiency and the condensation ratio of the steam, and reducing the temperature and steam content of the non-condensable gases entering the gas space. Due to these advantages, the gas space and liquid space volumes of this suppression pool device can be smaller than those of conventional suppression pools, resulting in lower construction costs.

Based on the same overall concept, the present invention also constructs a nuclear reactor, including a containment and steam pipes installed inside the containment, the containment also includes the aforementioned suppression pool device, with the outer shell segment 21 of the suppression tube 2 connected to the internal gas of the containment.

It should be understood that the above embodiments only express the preferred embodiments of the present invention, and their descriptions are specific and detailed, but they should not be understood as limiting the scope of the present invention. It should be noted that those skilled in the art can freely combine the above technical features without departing from the concept of the present invention, and can make several modifications and improvements, all of which fall within the scope of the present invention. Therefore, any equivalent changes and modifications within the scope of the claims of the present invention should fall within the scope of the claims of the present invention.

## Claims

1. A suppression pool device, **characterized by** comprising a shell (1) and at least one hollow suppression tube (2), wherein the shell (1) is provided with a sealed cavity and several baffles (3) to slow down gas flow; the cavity is filled with cooling liquid (11), and the baffles (3) are immersed in the cooling liquid (11); and a retention space (12) for accommodating the gas is provided above the cooling liquid (11) inside the cavity; the suppression tube (2) passes through the outer wall of the shell (1), and the suppression tube (2) comprises a shell outer shell segment (21) located outside the shell (1) and a inner shell segment (22) located inside the shell (1); an end of the inner shell segment (22) is inserted into the cooling liquid (11), the outer shell segment (21) is connected to the gas in the environment, and under predetermined conditions, the gas enters the cooling liquid (11) through the inner shell segment (22) for cooling.

2. The suppression pool device according to claim 1, **characterized in that** at least one side of any of the baffles (3) is fixedly connected to the inner side wall of the shell (1), and at least one other side of the baffles (3) is provided with a flow passage (7) for the gas to flow into the retention space (12) between the adjacent to the inner side wall of the shell (1).

3. The suppression pool device according to claim 2, **characterized in that** any two adjacent baffles (3) are arranged at intervals along the buoyancy direction of the gas.

4. The suppression pool device according to claim 2, **characterized in that** two flow passages (7) in the horizontal or liquid level direction are located on opposite sides of the inner wall of the shell (1); the inner wall of the shell (1) and the space defined by several baffles (3) in the cooling liquid (11), together with all the flow passages (7), constitute a cooling flow channel (71) for gas flow.

5. The suppression pool device according to claim 2, **characterized in that** the longitudinal cross-section of the baffles (3) is wavy, and the baffles (3) are provided with several grooved flow channels (31) for limiting the aggregation of gas into large bubbles.

6. The suppression pool device according to claim 2, **characterized in that** any of the baffles (3) forms a set angle with the liquid level of the cooling liquid (11), the angle is set to be 5°-10°.

7. The suppression pool device according to claim 2, **characterized in that** the shell (1) further comprises at least one support pillar (4) for supporting the baffles (3), wherein one end of the support pillar (4) is fixedly connected to the inner wall of the shell (1), and the other end passes through the baffles (3) and is fixedly connected thereto.

8. The suppression pool device according to claim 1, **characterized in that** the shell (1) further comprises an exhaust pipe (5) communicating with the retention space (12) and the environment, and a valve (6) installed on the exhaust pipe (5), wherein the opening and closing of the valve (6) are controlled based on the atmospheric pressure in the environment and the retention space (12) to discharge gas from the retention space (12).

9. The suppression pool device according to claim 1, **characterized in that** the inner shell segment (22) comprises a vertical segment (221) and a lateral segment (222) immersed in the cooling liquid (11), wherein one end of the vertical segment (221) is connected to the outer end of the shell, the other end of the vertical segment (221) passes through the retention space (12) and is connected to the lateral segment (222), and the lateral segment (222) is provided with exhaust ports for discharging the gas into the cooling liquid (11).

10. The suppression pool device according to claim 9, **characterized in that** the lateral segment (222) is tubular and sealed at both axial ends; the outer wall of the vertical segment (221) is connected to the lateral segment (222), and several exhaust holes (2221) are provided on the outer wall of the lateral segment (222) , and the exhaust port is one of the exhaust holes (2221).

11. The suppression pool device according to claim 2, **characterized in that** several grooved flow channels (31) are provided on the baffles (3) for limiting the aggregation of gas into large bubbles.

12. A nuclear reactor, comprising a containment vessel and steam pipes arranged inside the containment vessel, **characterized in that** the containment vessel further comprises the suppression pool device according to any one of claims 1-11, wherein the outer shell segment (21) of the suppression pool device is connected to the gas inside the containment vessel.
